(19) Europäisches Patentamt
European Patent Office
Office européen des brevets

(11) **EP 4 773 706 A1**

(12) **EUROPEAN PATENT APPLICATION**
published in accordance with Art. 153(4) EPC

(43) Date of publication:
**08.07.2026 Bulletin 2026/28**

(21) Application number: **23950710.6**

(22) Date of filing: **29.08.2023**

(51) International Patent Classification (IPC):
*H04W 72/51* (2023.01)     *H04W 4/70* (2018.01)
*H04W 48/10* (2009.01)     *H04W 72/0453* (2023.01)
*H04W 72/232* (2023.01)

(52) Cooperative Patent Classification (CPC):
**H04W 4/70; H04W 48/10; H04W 72/0453;
H04W 72/232; H04W 72/51**

(86) International application number:
**PCT/JP2023/031344**

(87) International publication number:
**WO 2025/046761 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **KUMAGAI, Shinya**
**Tokyo 100-6150 (JP)**

• **OKANO, Mayuko**
**Tokyo 100-6150 (JP)**
• **NAGATA, Satoshi**
**Tokyo 100-6150 (JP)**
• **SUN, Weiqi**
**Beijing 100190 (CN)**
• **WANG, Jing**
**Beijing 100190 (CN)**
• **CHEN, Lan**
**Beijing 100190 (CN)**

(74) Representative: **Hoffmann Eitle**
**Patent- und Rechtsanwälte PartmbB**
**Arabellastraße 30**
**81925 München (DE)**

(54) **COMMUNICATION APPARATUS AND DEVICE**

(57)     A communication apparatus according to the present invention comprises: a control unit that determines whether to transmit a signal to be initially accessed by a device having a lower complexity than a Narrow Band-Internet of Things (NB-IoT) device; and a transmission unit that, by using a resource smaller than a resource of a signal to be initially accessed by the NB-IoT device, transmits the signal to be initially accessed by the device.

FIG. 10

## Description

Technical Field

The present disclosure relates to a communication apparatus and a device.

Background Art

In New Radio (NR) (also referred to as "5G") that is a successor system of Long Term Evolution (LTE), a technology that satisfies a large-capacity system, a high data transmission speed, low delay, simultaneous connection of a large number of terminals, low cost, low power consumption, and the like as a requirement condition has been discussed (e.g., Non-Patent Literature (hereinafter, referred to as "NPL") 1).

Further, in Release 18 of 3GPP (registered trademark), Ambient Internet of Things (A-IoT) has been studied (e.g., NPL 2). In A-IoT, a device having an extremely simple configuration for a low-end IoT application that operates with extremely low power consumption is a target.

Citation List

Non-Patent Literature

NPL 1
3GPP TS 38.300 V17.3.0 (2022-12)
NPL 2
"New SID: Study on Ambient IoT", RP-222685, 3GPP TSG RAN Meeting #97-e, September 2022
NPL 3
3GPP TR 38.848 V0.1.0 (2023-03)
NPL 4
3GPP TS 36.211 V16.7.0 (2021-09)

Summary of Invention

However, the studies on the handling of initial access in A-IoT have been insufficient, and further studies are required.

An object of one aspect of the present disclosure is to provide a communication apparatus and a device each capable of appropriately processing initial access.

Solution to Problem

A communication apparatus according to one aspect of the present disclosure includes: a control section that determines transmission of a signal to be initially accessed by a device having lower complexity than a Narrow Band-Internet of Things (NB-IoT) device; and a transmission section that transmits, by using a resource, the signal to be initially accessed by the device, the resource being smaller than a resource for a signal to be initially accessed by the NB-IoT device.

A device according to one aspect of the present disclosure is a device having lower complexity than a Narrow Band-Internet of Things (NB-IoT) device, the device including: a control section that determines reception of a signal to be initially accessed; and a reception section that receives the signal to be initially accessed in a resource smaller than a resource for a signal to be initially accessed by the NB-IoT device.

Brief Description of Drawings

FIG. 1 is a diagram illustrating a configuration example of a radio communication system according to an embodiment;
FIG. 2 is a diagram illustrating Topology 1;
FIG. 3 is a diagram illustrating Topology 2;
FIG. 4 is a diagram illustrating Topology 3 in downlink (DL) assistance;
FIG. 5 is a diagram illustrating Topology 3 in uplink (UL) assistance;
FIG. 6 is a diagram illustrating Topology 4;
FIG. 7 is a diagram illustrating backscattering transmission;
FIG. 8 is a diagram illustrating Proposals 1 and 2;
FIG. 9 is a diagram illustrating Proposals 1 and 2;
FIG. 10 is a block diagram illustrating an exemplary configuration of a base station according to the embodiment;
FIG. 11 is a block diagram illustrating an exemplary configuration of a device according to the embodiment;
FIG. 12 is a diagram illustrating an example of a hardware configuration of the base station and the device according to the embodiment; and
FIG. 13 is a diagram illustrating an exemplary configuration of a vehicle.

Description of Embodiments

Hereinafter, an embodiment according to an aspect of the present disclosure will be described in detail with reference to the accompanying drawings. Note that the embodiment to be described below is merely an example, and an embodiment to which the present disclosure is applied is not limited to the embodiment below.

Existing techniques are used as appropriate for operations of a radio communication system in an embodiment of the present disclosure. Note that the existing techniques include, for example, existing LTE, but is not limited to existing LTE. Further, the term used in this specification, "LTE," has a broad meaning including LTE-Advanced and a system after LTE-Advanced (e.g., NR), unless otherwise specified.

Terms used in existing LTE, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH), are used in an embodiment of the present disclosure described below. This is for the sake of convenience in description, and the same signals, functions, and the like may be called by other names. Further, the above terms in NR correspond to NR-SS, NR-PSS, NR-SSS, NR-PBCH, NR-PRACH, and the like. Note that, even though the signal is used in NR, it is not necessarily explicitly referred to as "NR-".

Further, in the embodiment of the present disclosure, a duplex system may be a Time Division Duplex (TDD) system, a Frequency Division Duplex (FDD) system, or another system (e.g., Flexible Duplex or the like).

Furthermore, in an embodiment of the present disclosure, the term "configured" with respect to a radio parameter or the like may refer to a predetermined value being preconfigured, or it may refer to a radio parameter indicated from a base station or a terminal including a device being configured.

<System Configuration>

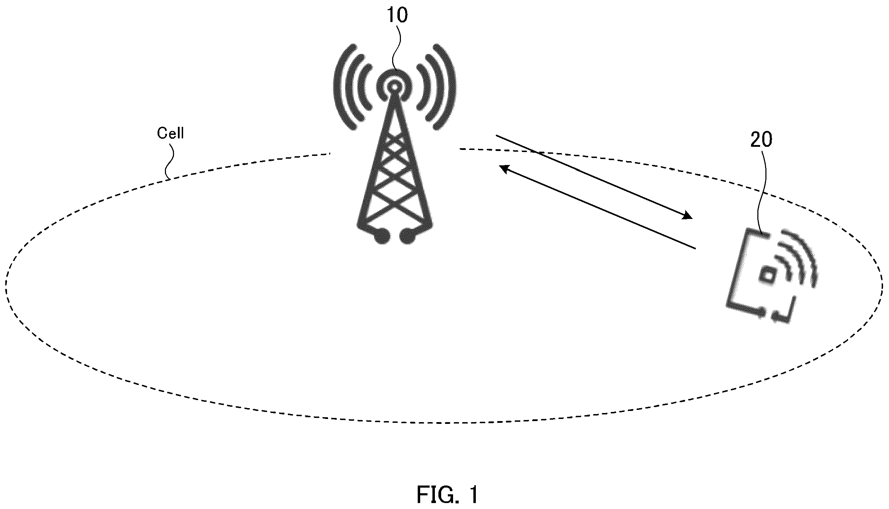

FIG. 1 is a diagram illustrating a configuration example of a radio communication system according to an embodiment. As illustrated in FIG. 1, the radio communication system includes base station 10 and device 20. Although FIG. 1 illustrates one base station 10 and one device 20, this is an example, and there may be a plurality of each. Device 20 may be an Ambient-IoT device.

Base station 10 is a communication apparatus that provides one or more cells and performs radio communication with device 20. Physical resources of the radio signal are defined in a time domain and a frequency domain. The time domain may be defined by the number of orthogonal frequency division multiplexing (OFDM) symbols. The frequency domain may be defined by the number of subcarriers or the number of resource blocks.

Base station 10 transmits a synchronization signal and system information to device 20. Base station 10 transmits a control signal and data to device 20 in downlink (DL). Base station 10 receives a control signal and data from device 20 in uplink (UL).

As will be described later, the radio communication system may include an intermediate node and/or an assisting node (see <Device Type and Topology> below). Hereinafter, "and/or" may be simply described as "/".

<Ambient IoT>

In Rel-18 (Release-18), a study on Ambient-IoT (hereinafter, may be referred to as "A-IoT") that is even lower end than existing narrow band IoT (NB-IoT) (e.g., see section 10 of NPL 4) has been approved (e.g., see NPL 2). In A-IoT, an ultra-low power consumption and ultra-low complexity device is a target.

In A-IoT, for example, the following introduction scenarios and characteristics may be studied for related use cases.

· Indoor or outdoor environment
· Base station type, for example, macro/micro/pico cell-based deployment
· Topology related to connectivity, for example, which node among a base station, a terminal (UE), a relay, a repeater, and the like communicates with the A-IoT device
· Duplex method is TDD or FDD, and a frequency band is a licensed band or an unlicensed band
· Coexistence with UE and network equipment in frequency band for existing 3GPP technology
· Assumption of traffic of outgoing call from device and incoming call to device

For example, the following RAN design targets can be established based on the above-described introduction scenarios and characteristics.

· Power consumption
· Complexity
· Coverage
· Data rate
· Positioning accuracy

Based on the introduction scenarios suitable for the related use case, the feasibility of satisfying the design target is compared and evaluated, and a function to be supported is specified.

<Device Type and Topology>

Based on the results of the study item, TR 38.848 (NPL 3) has been approved. In TR 38.848, A-IoT devices of the following categories are studied.
Device A: Device A has no power storage and no function of independent signal generation and signal amplification. Device A performs backscattering transmission.
Device B: Device B has power storage and has no function of independent signal generation. Device B performs backscattering transmission. Device B amplifies a reflected signal by using stored power.
Device C: Device C has power storage and has a function of independent signal generation. That is, device C has an active RF component for transmission.

It is assumed that the complexity of device A is about radio frequency identification (RFID).

In TR 38.848, Topologies 1 to 4 below are defined in an A-IoT network.

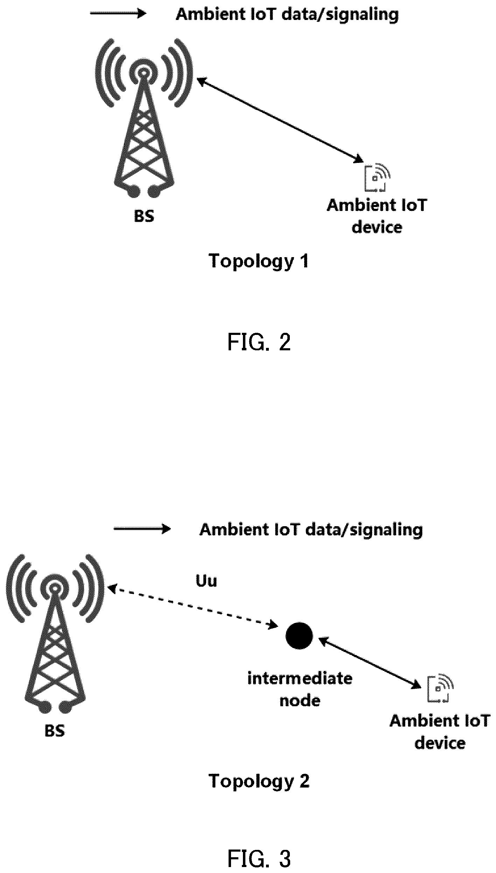

FIG. 2 is a diagram illustrating Topology 1. As illustrated in FIG. 2, Topology 1 is a configuration in which a base station (BS) and an A-IoT device communicate with each other. The A-IoT device directly executes bidirectional communication with the base station.

FIG. 3 is a diagram illustrating Topology 2. As illustrated in FIG. 3, Topology 2 is a configuration in which the base station and the A-IoT device communicate with each other via an intermediate node. The A-IoT device executes bidirectional communication with an intermediate node disposed between the base station and the A-IoT device. The intermediate node may be, for example, a relay, an integrated access and backhaul (IAB) node, a UE, a repeater, or the like.

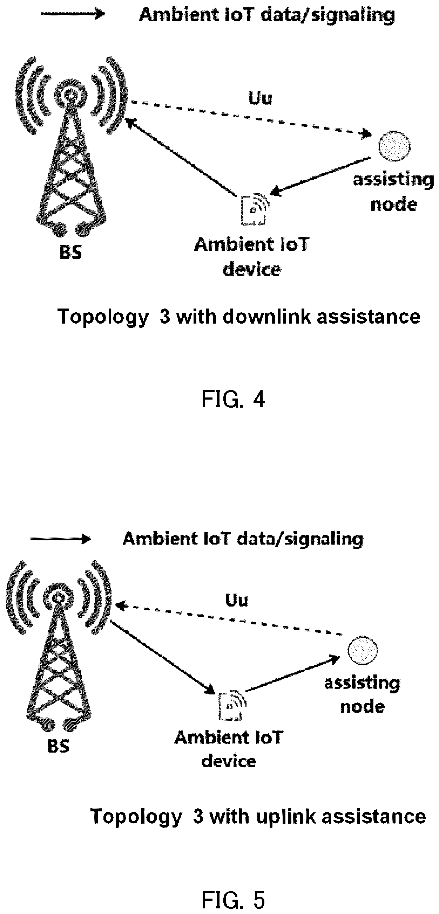

FIG. 4 is a diagram illustrating Topology 3 in DL assistance. As illustrated in FIG. 4, Topology 3 is a configuration including communication between the base station and an assisting node, communication between the assisting node and the A-IoT device, and communication between the A-IoT device and the base station.

The assisting node assists DL communication. For example, as illustrated in FIG. 4, the assisting node receives a DL signal from the base station and transmits the DL signal to the A-IoT device. As for the UL signal, the A-IoT device directly transmits to the base station.

FIG. 5 is a diagram illustrating Topology 3 in UL assistance. As illustrated in FIG. 5, Topology 3 is a configuration including communication between a base station and an assisting node, communication between the assisting node and an A-IoT device, and communication between the A-IoT device and the base station.

The assisting node assists UL communication. For example, as illustrated in FIG. 5, the assisting node receives the UL signal from the A-IoT device and transmits the UL signal to the base station. As for the DL signal, the A-IoT device directly receives from the base station.

The assisting node illustrated in FIGS. 4 and 5 may transmit a carrier wave for causing the A-IoT device to generate backscatter. The assisting node may be, for example, a relay, an IAB node, a UE, a repeater, or the like.

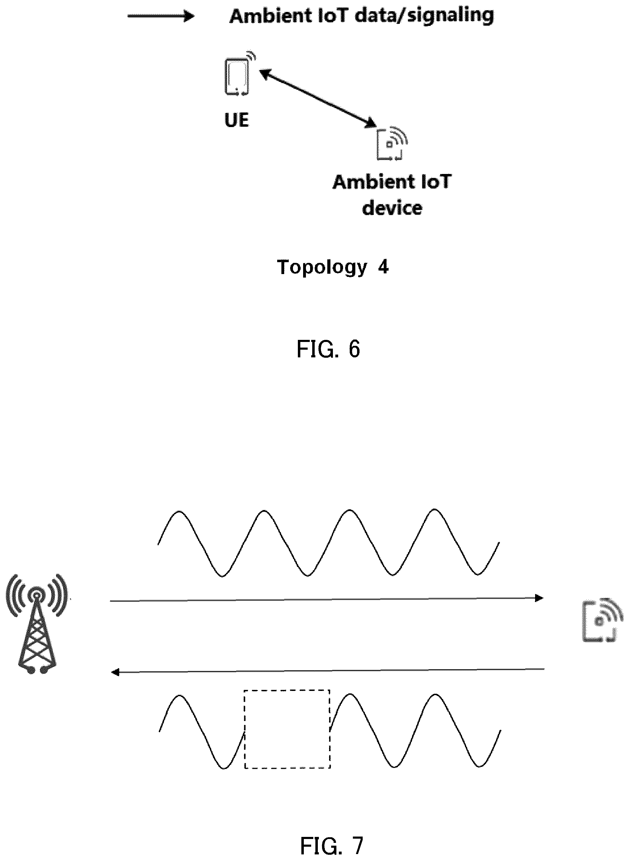

FIG. 6 is a diagram illustrating Topology 4. Topology 4 is a configuration in which a UE and an A-IoT device communicate with each other. The A-IoT device executes bidirectional communication with the UE. Topology 4 can also be regarded as sidelink (SL) communication.

In Topologies 1 to 4, a carrier wave may be provided to an A-IoT device from another node inside or outside the topology (see section 4.2.1 of NPL 3).

<Backscattering Transmission>

The base station, the intermediate node, the assisting node, and another node transmit the RF signal to the A-IoT device. The A-IoT device is activated and obtains power from an RF operating field from the base station, the intermediate node, the assisting node, and another node via inductive coupling.

The A-IoT device backscatters and modulates the RF signal received from the base station, the intermediate node, the assisting node, and another node by switching a reflection coefficient of an antenna of the own device, and transmits information to the base station, the intermediate node, the assisting node, and another node.

FIG. 7 is a diagram illustrating backscattering transmission. FIG. 7 illustrates an example in which the A-IoT device performs On-Off keying to transmit information. A region surrounded by a broken line illustrated in FIG. 7 indicates an OFF interval and may correspond to "0" of the information (bit). A signal of a sine wave may correspond to "1" of the information.

<Synchronization Signal and PBCH in NR>

In NR, PSS, SSS, and PBCH are transmitted as an SSB (SS/PBCH block) in consecutive symbols.

· Time Location

A plurality of SSBs may be transmitted in a half frame. The time location of an SSB in a half frame is defined by the specification.

The SSB is configured of four OFDM symbols. With respect to the start of the SSB, PSS occupies one symbol (symbol 0), SSS occupies one symbol (symbol 2), and PBCH occupies three symbols (symbols 1/2/3). In the initial access, the terminal may assume that the half frame including the SSB occurs in a period of 20 ms.

· Frequency Location

PSS/SSS is configured of 127 subcarriers. PBCH is configured of 240 subcarriers.

· SS Sequence Generation

There are 1008 unique physical cell IDs (PCIs). Each of PSS and SSS transports a part of the PCI. The terminal detects a boundary of a time unit, such as a symbol, a slot, a subframe, and a frame by detecting the SSB, and acquires the PCI.

In NR, for example, the following information is transported by PBCH (MIB).

· System frame number
· Half frame indication
· SSB index
· Subcarrier spacing
· Frequency offset between the SSB and the entire resource block grid in terms of number of subcarriers
· Position information of DMRS (DeModulation Reference Signal) of PDSCH and PUSCH
· Information for determining CORESET of SIB 1
· Information indicating whether the cell is prohibited
· Information indicating whether the terminal can reselect another cell at the same frequency as the prohibited cell in a case where the cell is prohibited

<Synchronization Signal and PBCH in MB-IoT>

In LTE, for NB-IoT, NPSS (narrowband PSS), NSSS (narrowband SSS), and NPBCH (narrowband PBCH) are transmitted.

· Time Location

The time location of NPSS/NSSS/NPBCH is defined in the specification. The NPSS/NSSS occupies 11 OFDM symbols in one subframe.

NPBCH occupies 64 subframes (11 OFDM symbols in each subframe). The 64 subframes are configured of subframes each in 64 consecutive radio frames. The 64 subframes are actually 8 repetitions of NPBCH, and each repetition occupies 8 subframes.

In the initial access, the terminal may assume that NPSS is transmitted in a period of 10 ms. In the initial access, the terminal may assume that NSSS is transmitted in a period of 20 ms. NPBCH is transmitted in a period of 640 ms.

· Frequency Location

NPSS is configured of 11 subcarriers. NSSS is configured of 12 subcarriers. NPBCH is configured of 12 subcarriers.

· SS Sequence Generation

There are 504 unique PCIs. NSSS transports the PCI, and NPSS does not transport the PCI. The terminal detects a boundary of a time unit such as a symbol, a slot, a subframe, and a frame by detecting the SS, and acquires the PCI.

In NB-IoT, for example, the following information is transported by NPBCH (MIB in NB-IoT).

· System frame number
· Scheduling information of SIB
· Notification of change of system information
· Information indicating whether cell access prohibition is effective
· Notification of operation mode
·· Intra-band deployment with NB-IoT cell and LTE cell having shared PCI
·· Intra-band deployment with NB-IoT cell and LTE cell having different PCI
·· Guard band
·· Standalone

<Analysis>

The A-IoT targets an IoT technology that relies on an ultra-low power consumption and ultra-low complexity device for a very low-end IoT application.

Therefore, it is expected that the A-IoT device has lower complexity and power consumption and a lower data rate than the NB-IoT. Further, it is expected that the A-IoT also depends on narrowband transmission as in the NB-IoT.

There is no specific consideration on how to handle the initial access such as a synchronization signal and PBCH (MIB) for the ambient IoT device as described above. For this reason, the A-IoT device cannot appropriately start communication.

Therefore, in the present disclosure, the following proposals are provided on the handling of the initial access such as a synchronization signal and PBCH in the ambient IoT.

Further, in the present disclosure, the following proposals are provided on the technology of the synchronization signal and PBCH (MIB) for the ambient IoT to conform to the above-described features of the ambient IoT.

The following proposals may be applied to the ambient A-IoT device of a specific device type (device A/B/C) or may be applied to the ambient A-IoT device of all device types. Further, different solutions may be applied to different device types. Hereinafter, an ambient IoT may be referred to as an A-IoT.

<Proposal 1>

Proposal 1 relates to a synchronization signal in the ambient IoT. Hereinafter, a new type of synchronization signal is defined for the ambient IoT, and the new type of synchronization signal is referred to as AIoT-SS. Further, hereinafter, the ambient IoT may be referred to as A-IoT.

The AIoT-SS is transmitted from the base station/support node/intermediate node to the A-IoT device. The support node/intermediate node may be a terminal, an IAB node, a relay, or a repeater.

<Proposal 1: AIoT-SS Type>

The following Options 1 and 2 are provided for the type of AIoT-SS.

<Proposal 1: AIoT-SS Type: Option 1>

For the A-IoT, two types of synchronization signals are defined. For example, an AIoT-PSS and an AIoT-SSS are defined. The two types of the AIoT-PSS and the AIoT-SSS are transmitted to the A-IoT device.

The AIoT-PSS and the AIoT-SSS are used for, for example, boundary detection (synchronization) of a time unit, such as a symbol, a slot, a subframe, a frame, and a radio frame. For example, the A-IoT device detects a boundary of a time unit by using two synchronization signals of the AIoT-PSS and the AIoT-SSS.

<Proposal 1: AIoT-SS Type: Option 2>

For the A-IoT, one type of synchronization signal is defined. For example, an AIoT-SS is defined as one type of synchronization signal. The one type of AIoT-SS is transmitted to the A-IoT device.

The AIoT-SS is used for, for example, boundary detection of a time unit such as a symbol, a slot, a subframe, a frame, and a radio frame. For example, the A-IoT device detects a boundary of a time unit by using one AIoT-SS.

The AIoT-SS of Option 2 is defined more easily than NR and NB-IoT. The A-IoT device may be capable of using a simple function by detecting one synchronization signal. Therefore, it is possible to further reduce the power consumption and the complexity of the A-IoT device.

<Proposal 1: Frequency Domain Resource>

For the A-IoT, the following Options 1 to 3 are provided for the frequency domain resource in the synchronization signal.

<Proposal 1: Frequency Domain Resource: Option 1>

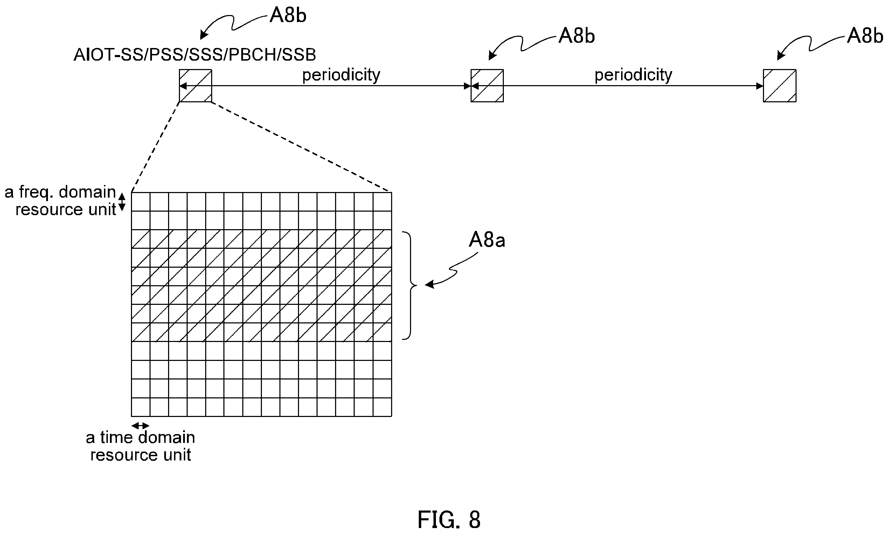

The AIoT-PSS, the AIoT-SSS, and the AIoT-SS are mapped to a plurality of consecutive subcarriers. For example, as illustrated by arrow A8a in FIG. 8, the synchronization signal in the A-IoT is mapped to a plurality of consecutive subcarriers (in FIG. 8, a frequency domain resource unit).

The number of subcarriers for each synchronization signal (e.g., "X") may be defined by the specification. For example, the number of subcarriers in each of the AIoT-PSS, the AIoT-SSS, and the AIoT-SS may be defined by the specification. Further, for example, one number of subcarriers (one X for two AIoT-PSSs and AIoT-SSS) may be defined by the specification for two AIoT-PSSs and AIoT-SSS.

The number of subcarriers for the synchronization signal in the A-IoT may be smaller than the number of subcarriers for the synchronization signal in the NB-IoT. For example, "X = 6" may be defined for the AIoT-PSS and the AIoT-SSS. For example, "X = 6" may be defined for the AIoT-SS. In the NB-IoT, the number of subcarriers for NPSS is 11. The number of subcarriers for NSSS is 12. By reducing the number of consecutive subcarriers of the synchronization signal in the A-IoT, the power consumption of the A-IoT device can be reduced.

<Proposal 1: Frequency Domain Resource: Option 2>

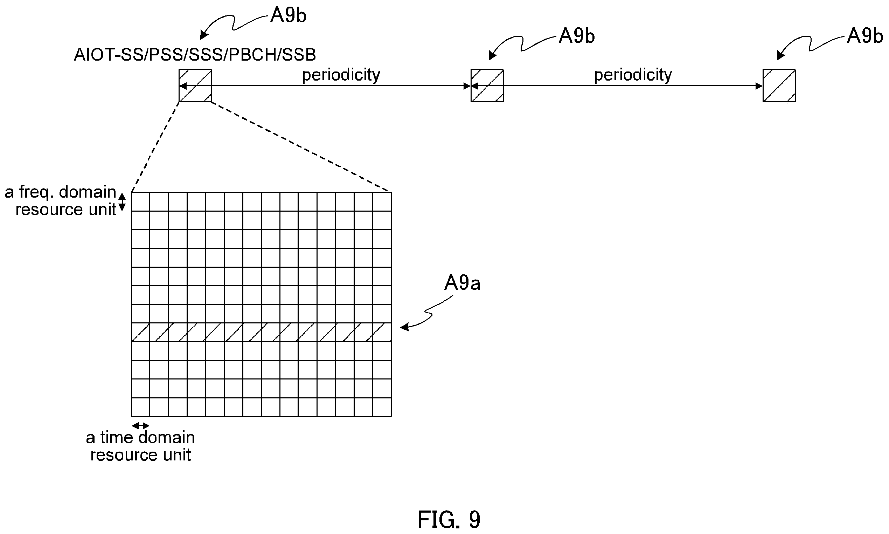

The AIoT-PSS, the AIoT-SSS, and the AIoT-SS are mapped to one subcarrier. For example, as illustrated by arrow A9a in FIG. 9, the synchronization signal in the A-IoT is mapped to one subcarrier (in FIG. 9, a frequency domain resource unit). In other words, the synchronization signal in the A-IoT is transmitted as a single tone to the A-IoT device.

In the A-IoT, it is expected that the bandwidth is very narrow. Therefore, the synchronization signal in the A-IoT may occupy only one subcarrier.

<Proposal 1: Frequency Domain Resource: Option 3>

The AIoT-PSS, the AIoT-SSS, and the AIoT-SS are mapped to non-consecutive subcarriers. One subcarrier may be non-consecutive, or a plurality of grouped subcarriers may be non-consecutive.

<Proposal 1: Time Domain Resource>

The AIoT-PSS, the AIoT-SSS, and the AIoT-SS are mapped to a plurality of time units such as consecutive or non-consecutive symbols, slots, subframes, and frames.

The AIoT-PSS and the AIoT-SSS may be transmitted in different symbols. Further, the AIoT-PSS and the AIoT-SSS may be transmitted in different slots or subframes.

The time location of the AIoT-SS, the AIoT-PSS, and the AIoT-SSS in the slot/subframe/system frame may be defined by the specification. For example, the time location may be defined as an X-th symbol of a Y-th subframe.

The AIoT-SS, the AIoT-PSS, and the AIoT-SSS are transmitted periodically. For example, as illustrated by arrow A8b in FIG. 8 and arrow A9b in FIG. 9, the AIoT-SS, the AIoT-PSS, and the AIoT-SSS are transmitted periodically. The periodicity (e.g., "P") may be defined by the specification.

The period of the synchronization signal in the A-IoT may be configured to be longer than that in the NB-IoT. In the NB-IoT, the period of NPSS is 10 ms, and the period of NSSS is 20 ms. By increasing the period of the synchronization signal in the A-IoT, the power consumption of the A-IoT device can be reduced.

<Proposal 1: Time-Frequency Domain Resource>

The number of time-frequency domain resources (resource elements) occupied by the AIoT-SS, the AIoT-PSS, and the AIoT-SSS is configured to be smaller than that in NR and NB-IoT. With this configuration, the power consumption of the A-IoT device can be reduced.

<Proposal 1: Sequence Generation>

The sequences of the AIoT-SS, the AIoT-PSS, and the AIoT-SSS are generated based on the PCI. The number of unique PCIs that are supported (e.g., "N") may be defined by the specification.

The number of PCIs may be defined to be smaller than that in the NB-IoT. The number of PCIs in the NB-IoT is 504. By reducing the number of PCIs, the complexity of the A-IoT device can be reduced.

In a case of transmitting two types of synchronization signals of the AIoT-PSS and the AIoT-SSS, the following Options 1 and 2 are provided.

<Proposal 1: Sequence Generation: Option 1>

Each of the AIoT-PSS and the AIoT-SSS is generated based on a part of the PCI. For example, the PCI is represented by Expression (1).

[Expression 1]

$$N_{\mathrm{ID}}^{\mathrm{cell}} = k N_{\mathrm{ID}}^{(1)} + N_{\mathrm{ID}}^{(2)} \tag{1}$$

where $N_{\mathrm{ID}}^{(1)} \in \{0,1,\dots,\mathrm{m}\}$ and

$N_{\mathrm{ID}}^{(2)} \in \{0,1,\dots,\mathrm{n}\}$.

The AIoT-PSS is generated based on the identifier illustrated in the second term on the right side of Expression (1). The AIoT-SSS is generated based on the identifier illustrated in the first term on the right side of Expression (1). k, m, and n of Expression (1) are determined such that the number of PCIs is smaller than the number of PCIs in the NB-IoT, for example.

<Proposal 1: Sequence Generation: Option 2>

The sequence of the AIoT-PSS may be defined by the specification. The sequence of the AIoT-PSS does not depend on the PCI and does not transport the PCI. The sequence of the AIoT-SSS is generated based on the PCI and transports the PCI.

Further, the sequence of the AIoT-SSS may be defined by the specification. The sequence of the AIoT-SSS does not depend on the PCI and does not transport the PCI. The sequence of the AIoT-PSS is generated based on the PCI and transports the PCI.

<Proposal 1: Subcarrier Spacing (SCS)>

The SCS of the AIoT-SS, the AIoT-PSS, and the AIoT-SSS may be 15 kHz, 7.5 kHz, or 3.75 kHz. Further, the SCS of the AIoT-SS, the AIoT-PSS, and the AIoT-SSS may be smaller than 3.75 kHz. The SCS of the synchronization signal in NR and NB-IoT is 15 kHz.

In the AIoT, a fixed SCS or a plurality of SCSs may be supported. The SCS may be defined by the specification correspondingly to a frequency band, for example. For example, the SCS "x" may be defined in a certain frequency band, and the SCS "y" may be defined in another frequency band. In a case of supporting a plurality of SCSs, the A-IoT device may attempt to detect a plurality of SCSs.

The length of the time domain resource unit such as a symbol may be scaled according to the SCS or may be fixed. In a case of being scaled according to the SCS, the length of the time domain resource unit may be shortened as the SCS increases in size.

The SCS may be applied to DL traffic/UL traffic in the A-IoT. Further, the SCS may be applied to a control channel or a signal in the A-IoT.

<Proposal 1: Summary>

With the above-described configuration, the A-IoT device can appropriately execute communication. Further, a synchronization signal conforming to the feature of the A-IoT, such as ultra-low power consumption and ultra-low complexity, is provided.

<Proposal 2>

Proposal 2 relates to system information in the A-IoT. Hereinafter, a new parameter for providing a master information block (MIB) is introduced for the A-IoT. The new parameter is referred to as AIoT-MIB. Further, a new physical channel referred to as AIoT-PBCH is introduced for transmitting the AIoT-MIB.

The AIoT-PBCH and the AIoT-MIB are transmitted from the base station/support node/intermediate node to the A-IoT device. The support node/intermediate node may be a terminal, an IAB node, a relay, or a repeater.

<Proposal 2: Frequency Domain Resource>

The following Options 1 to 3 are provided for the frequency domain resource in the AIoT-PBCH (AIoT-MIB) of the AIoT.

<Proposal 2: Frequency Domain Resource: Option 1>

The AIoT-PBCH is mapped to a plurality of consecutive subcarriers. For example, as illustrated by arrow A8a in FIG. 8, the notification signal in the AIoT is mapped to a plurality of consecutive subcarriers (in FIG. 8, a frequency domain resource unit).

The number of subcarriers (e.g., "X") may be defined by the specification. The number of subcarriers for the AIoT-PBCH in the A-IoT may be smaller than the number of subcarriers for the synchronization signal in the NB-IoT. For example, "X = 6" may be defined for the number of subcarriers for the AIoT-PBCH. In the NB-IoT, the number of subcarriers for the NPBCH is 12. By reducing the number of consecutive subcarriers for the notification signal in the A-IoT, the power consumption of the A-IoT device can be reduced.

<Proposal 2: Frequency Domain Resource: Option 2>

The AIoT-PBCH is mapped to one subcarrier. For example, as illustrated by arrow A9a in FIG. 9, the notification signal in the AIoT is mapped to one subcarrier (in FIG. 9, a frequency domain resource unit). In other words, the notification signal in the A-IoT is transmitted as a single tone to the A-IoT device.

In the A-IoT, it is expected that the bandwidth is very narrow. Therefore, the notification signal in the A-IoT may occupy only one subcarrier.

<Proposal 2: Frequency Domain Resource: Option 3>

The AIoT-PBCH is mapped to non-consecutive subcarriers. One subcarrier may be non-consecutive, or a plurality of grouped subcarriers may be non-consecutive.

<Proposal 2: Time Domain Resource>

The AIoT-PBCH is mapped to a plurality of time units such as consecutive or non-consecutive symbols, slots, subframes, and frames.

The time location of the AIoT-PBCH in the slot/subframe/system frame may be defined by the specification. For example, the time location may be defined as an X-th symbol of a Y-th subframe.

The AIoT-PBCH is transmitted periodically. For example, as illustrated by arrow A8b in FIG. 8 and arrow A9b in FIG. 9, the AIoT-PBCH is transmitted periodically. The periodicity (e.g., "P") may be defined by the specification.

<Proposal 2: SCS>

The SCS of the AIoT-PBCH may be 15 kHz, 7.5 kHz, or 3.75 kHz. Further, the SCS of the AIoT-PBCH may be smaller than 3.75 kHz. The SCS of PBCH in NR and the SCS of NPBCH in NB-IoT are 15 kHz.

In the AIoT, a fixed SCS or a plurality of SCSs may be supported. The length of the time domain resource unit such as a symbol may be scaled according to the SCS or may be fixed. In a case of being scaled according to the SCS, the length of the time domain resource unit may be shortened as the SCS increases in size.

<Proposal 2: AIoT-SSB>

The AIoT-SS, the AIoT-PSS, the AIoT-SSS, and the AIoT-PBCH are transmitted as an AIoT-SSB (SS/PBCH block) in consecutive time units. The A-IoT device receives the AIoT-SSB.

<Proposal 2: Time-Frequency Domain Resource>

The number of time-frequency domain resources occupied by the AIoT-PBCH/AIoT-SSB is set to be smaller than that in NR and NB-IoT. With this configuration, the power consumption of the A-IoT device can be reduced.

<Proposal 2: AIoT-MIB/AIoT-PBCH Payload>

The payload of the AIoT-PBCH (AIoT-MIB) is configured to be smaller than that in NR and NB-IoT. The following information related to the A-IoT or a subset of the following information is transmitted by the AIoT-PBCH (AIoT-MIB).

- System frame number
- Scheduling information on remaining system information (SIB1 or SIB dedicated to A-IoT device)
- Information on cell access barring
- Notification of change of system information
- Notification of coexistence operation mode with normal UE (e.g., existing UE other than A-IoT) (e.g., notification of intra-band/inter-band, notification of same/different PCI)
- Information on SCS in DL and UL of control channel, initial access-related information, or UE-specific information of broadcast information such as traffic and remaining system information (e.g., SIB1 or SIB dedicated to A-IoT device)
- Frequency offset between AIoT-SS/AIoT-PSS/AIoT-SSS/AIoT-PBCH/AIoT-SSB and boundary of resource block grid
- SSB index
- Information on DMRS location in DL and UL of control channel, initial access-related information, or UE-specific information of broadcast information such as traffic and remaining system information (e.g., SIB1 or SIB dedicated to A-IoT device)

<Proposal 2: Summary>

With the above-described configuration, the A-IoT device can appropriately execute communication. Further, a synchronization signal conforming to the feature of the A-IoT, such as ultra-low power consumption and ultra-low complexity, is provided.

<Proposal 3>

Proposal 3 relates to coexistence between the A-IoT and the normal UE. Regarding the time domain resource in the preamble transmission of the A-IoT, the following Options 1 and 2 are provided.

<Proposal 3: Option 1>

It is expected that the A-IoT device and the normal UE do not overlap in time/frequency resources for transmission of the AIoT-SS/AIoT-PSS/AIoT-SSS/AIoT-PBCH/AIoT-SSB and transmission/reception of the signal of the normal UE.

<Proposal 3: Option 2>

The time/frequency resources used for transmission of the AIoT-SS/AIoT-PSS/AIoT-SSS/AIoT-PBCH/AIoT-SSB are notified to the normal UE by higher layer signaling such as SIB or RRC. The normal UE does not use the notified time/frequency resources for transmission/reception of the signal.

<Proposal 3: Variation>

The above-described option may be applied to a specific type of signal of the normal UE. For example, the above-described options may be applied to a synchronization signal such as a PSS and an SSS of the NR, a reference signal such as a demodulation reference signal (DMRS) and a channel state information reference signal (CSI-RS) of the NR, or a PRACH transmission signal of the NR.

<Proposal 3: Summary>

With the above-described configuration, the A-IoT device can appropriately execute communication.

<Proposal 4>

Proposal 4 relates to coexistence between a signal between the intermediate node/support node/UE (UE of topology 4) and the base station or between the intermediate node/support node/UE and the normal UE, and the AIoT-SS/AIoT-PSS/AIoT-SSS/AIoT-PBCH/AIoT-SSB.
In Topologies 2, 3, and 4, the intermediate node/support node/UE transmits the AIoT-SS/AIoT-PSS/AIoT-SSS/AIoT-PBCH/AIoT-SSB. The A-IoT device receives the AIoT-SS/AIoT-PSS/AIoT-SSS/AIoT-PBCH/AIoT-SSB from the intermediate node/support node/UE. The frequency/time resources for transmission of the AIoT-SS/AIoT-PSS/AIoT-SSS/AIoT-PBCH/AIoT-SSB are provided from the base station to the intermediate node/support node/UE.
The following Options 1 to 3 are provided for coexistence between a signal between the intermediate node/support node/UE and the base station or between the intermediate node/support node/UE and the normal UE, and the AIoT-SS/AIoT-PSS/AIoT-SSS/AIoT-PBCH/AIoT-SSB.

<Proposal 4: Option 1>

The intermediate node/support node/UE assumes that transmission of the AIoT-SS/AIoT-PSS/AIoT-SSS/AIoT-PBCH/AIoT-SSB (time/frequency resources) does not overlap with a signal (time/frequency resources) between the intermediate node/support node/UE and the base station. The signal between the intermediate node/assisting node/UE and the base station may be DL/UL.
The intermediate node/support node/UE assumes that transmission of the AIoT-SS/AIoT-PSS/AIoT-SSS/AIoT-PBCH/AIoT-SSB does not overlap with a signal (time/frequency resources) between the intermediate node/support node/UE and the normal UE. The signal between the intermediate node/assisting node/UE and the normal UE may be DL/UL.

<Proposal 4: Option 2>

In a case where transmission of the AIoT-SS/AIoT-PSS/AIoT-SSS/AIoT-PBCH/AIoT-SSB overlaps with a signal between the intermediate node/support node/UE and the base station, the intermediate node/-support node/UE prioritizes the transmission of the AIoT-SS/AIoT-PSS/AIoT-SSS/AIoT-PBCH/AIoT-SSB.
In a case where transmission of the AIoT-SS/AIoT-PSS/AIoT-SSS/AIoT-PBCH/AIoT-SSB overlaps with a signal between the intermediate node/support node/UE and the normal UE, the intermediate node/support node/UE prioritizes the transmission of the AIoT-SS/AIoT-PSS/AIoT-SSS/AIoT-PBCH/AIoT-SSB.

<Proposal 4: Option 3>

In a case where transmission of the AIoT-SS/AIoT-PSS/AIoT-SSS/AIoT-PBCH/AIoT-SSB overlaps with a signal between the intermediate node/support node/UE and the base station, the intermediate node/-support node/UE prioritizes the signal between the intermediate node/support node/UE and the base station.
In a case where transmission of the AIoT-SS/AIoT-PSS/AIoT-SSS/AIoT-PBCH/AIoT-SSB overlaps with a signal between the intermediate node/support node/UE and the normal UE, the intermediate node/support node/UE prioritizes the signal between the intermediate node/support node/UE and the normal UE.

<Proposal 4: PCI Provision>

The PCI for generating the AIoT-SS/AIoT-PSS/AIoT-SSS is provided from the base station to the intermediate node/support node/UE. The intermediate node/support node/UE generates the AIoT-SS/AIoT-PSS/AIoT-SSS by using the PCI provided from the base station, for example, based on the method described in <Proposal 1: Sequence Generation>.

<Proposal 4: MIB Provision>

The content of the AIoT-PBCH (AIoT-MIB) is provided from the base station to the intermediate node/support node/UE. The content of the AIoT-PBCH (AIoT-MIB) may be the information described in <Proposal 2: AIoT-MIB/AIoT-PBCH Payload>.

<Proposal 4: Summary>

With the above-described configuration, the A-IoT device can appropriately execute communication.

<Capability>

The A-IoT device may report the following capability information (AIoT capability) to the base station, the intermediate node, the support node, and the terminal.

· Device type of A-IoT

The intermediate node, the assisting node, and the terminal may report the following capability information to the base station and the A-IoT device.

    · Information on whether to support communication with an A-IoT device
    · Device type of A-IoT to be supported

Each of the above-described proposals and options may be applied in a case where the A-IoT device, the intermediate node, and the assisting node support the corresponding proposal and option or in a case where the corresponding proposal and option are enabled by higher layer signaling.

<Others>

A new term may be defined for the A-IoT for the frequency domain resource unit. For example, as for the term "subcarrier," another term may be defined for the A-IoT.

A new term may be defined for the A-IoT for the time domain resource unit. For example, as for the terms "symbol", "slot", "subframe", and "frame," another term may be defined for the A-IoT.

The A-IoT device may be referred to as an A-IoT UE, an A-IoT terminal, an A-IoT node, a terminal, or a communication apparatus. Further, the A-IoT device may be simply referred to as an A-IoT.

The A-IoT device may be regarded as a device having lower complexity than the NB-IoT device. The complexity may be regarded as, for example, complexity of a configuration/structure related to a minimum/maximum transmission/reception bandwidth supported by the device and/or a maximum DL/UL data rate supported by the device and/or a maximum DL/UL transport block (TB) size supported by the device and/or a Layer 2 buffer size. The configuration/structure may be replaced with hardware. TB is an abbreviation for Transport Block.

The base station, the intermediate node, the support node, and the terminal (UE of Topology 4) may be referred to as an A-IoT base station, an A-IoT parent node, an A-IoT NB, a base station, or a communication apparatus.

The initial access may be, for example, cell search, time/frequency synchronization, and MIB acquisition.

<Configuration of Base Station>

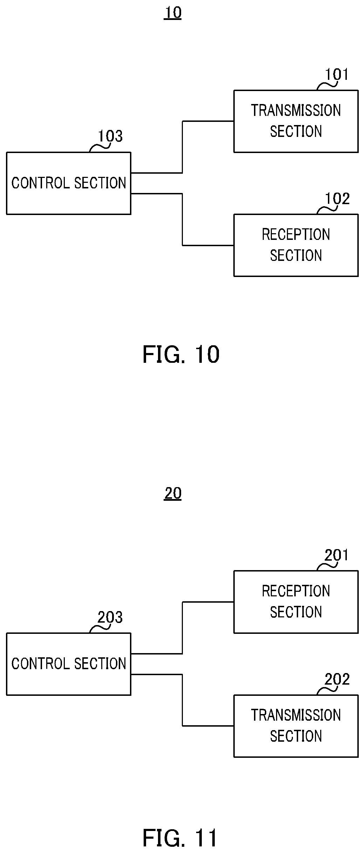

FIG. 10 is a block diagram illustrating an exemplary configuration of base station 10 according to the embodiment. Base station 10 includes, for example, transmission unit 101, reception unit 102, and control unit 103. Base station 10 communicates with device 20 (see FIG. 11) by radio. Base station 10 may be an intermediate node, a support node, or a terminal (SL terminal that communicates with device 20).

Transmission section 101 transmits a downlink (DL) signal to device 20. For example, transmission section 101 transmits the DL signal under the control of control section 103.

The DL signal may include, for example, a downlink data signal and control information (e.g., Downlink Control Information (DCI)). The DL signal may also include information (e.g., UL grant) indicating scheduling related to signal transmission of device 20. Moreover, the DL signal may include higher layer control information (e.g., Radio Resource Control (RRC) control information). Furthermore, the DL signal may include a reference signal.

Channels used for DL signal transmission include, for example, data channels and control channels. For example, the data channels may include a Physical Downlink Shared Channel (PDSCH), and the control channels may include a Physical Downlink Control Channel (PDCCH). Base station 10 transmits, to device 20, the control information using PDCCH, and the downlink data signal using PDSCH, for example.

The reference signal included in the DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as DMRS and PTRS is used for demodulation of a downlink data signal and is transmitted by using PDSCH.

Reception section 102 receives an uplink (UL) signal transmitted from device 20. For example, reception section 102 receives the UL signal under the control of control section 103.

Control section 103 controls communication operations of base station 10 including transmission processing in transmission section 101 and reception processing in reception section 102.

By way of example, control section 103 acquires information such as data and control information from a higher layer and outputs the data and control information to transmission section 101. Further, control section 103 outputs the data, the control information, and/or the like received from reception section 102 to the higher layer.

For example, control section 103 allocates a resource (or channel) used for DL signal transmission and reception and/or a resource used for UL signal transmission and reception, based on the signal (e.g., data, control information and/or the like) received from device 20 and/or the data, control information, and/or the like acquired from the higher layer. Information on the allocated resource(s) may be included in control information to be transmitted to device 20.

Control section 103 configures a PUCCH resource, as an example of the resource to be used for transmitting and receiving a UL signal. Information on the PUCCH configuration such as a PUCCH cell timing pattern (PUCCH configuration information) may be indicated to device 20 by RRC.

Control unit 103 may determine transmission of a signal to which device 20 having lower complexity than the NB-IoT device performs initial access. The signal to which device 20 performs initial access may be, for example, the AIoT-SS/AIoT-PSS/AIoT-SSS/AIoT-PBCH/AIoT-SSB.

Transmission section 101 may transmit the signal to which device 20 performs initial access by using a resource smaller than a signal to which the NB-IoT device performs initial access. The resource may be a frequency/time resource.

Transmission section 101 may transmit two types of synchronization signals or one type of synchronization signal as the signal to which device 20 performs initial access. The two types of synchronization signals may be the AIoT-PSS and the AIoT-SSS. The one type of synchronization signal may be the AIoT-SS.

Transmission section 101 may map the signal to which device 20 performs initial access to a plurality of subcarriers or may map the signal to one subcarrier.

In a case where base station 10 is an intermediate node, a support node, or a terminal (SL terminal), control section 103 may operate as follows (hereinafter, for convenience of description, base station 10 is assumed to be the intermediate node).

Control section 103 may assume that the signal to which device 20 performs initial access and a signal between the intermediate node and the base station of the intermediate node do not overlap or may assume that the signal to which device 20 performs initial access and a signal between the intermediate node and the normal UE do not overlap.

In a case where the signal to which device 20 performs initial access and a signal between the intermediate node and the base station of the intermediate node overlap or in a case where the signal to which device 20 performs initial access and a signal between the intermediate node and the terminal overlap, control section 103 may prioritize transmission of the signal to which device 20 performs initial access.

In a case where the signal to which device 20 performs initial access and a signal between the intermediate node and the base station of the intermediate node overlap, control section 103 may prioritize the signal between the intermediate node and the base station of the intermediate node or in a case where the signal to which device 20 performs initial access and a signal between the intermediate node and the terminal overlap, control section 103 may prioritize the signal between the intermediate node and the terminal.

<Configuration of Device>

FIG. 11 is a block diagram illustrating an example of a configuration of device 20 according to the embodiment. Device 20 includes, for example, reception section 201, transmission section 202, and control section 203. Device 20 communicates with base station 10 by radio, for example. Device 20 may be, for example, an A-IoT device.

Reception section 201 receives a DL signal transmitted from base station 10. For example, reception section 201 receives the DL signal under the control of control section 203.

Transmission section 202 transmits a UL signal to base station 10. For example, transmission section 202 transmits the UL signal under the control of control section 203.

The UL signal may include, for example, an uplink data signal and control information (e.g., UCI). For example, information on processing capability of device 20 (e.g., UE capability) may also be included. Further, the UL signal may include a reference signal.

Channels used for UL signal transmission include, for example, a data channel and a control channel. For example, the data channel includes a Physical Uplink Shared Channel (PUSCH) and the control channel includes a Physical Uplink Control Channel (PUCCH). For example, device 20 receives control information from base station 10 using PUCCH and transmits an uplink data signal using PUSCH.

The reference signal included in the UL signal may include, for example, at least one of a DMRS, PTRS, CSI-RS, SRS, and PRS. For example, the reference signals such as DMRS and PTRS are used for demodulation of an uplink data signal and are transmitted using an uplink channel (e.g., PUSCH).

Control section 203 controls communication operations of device 20 including reception processing in reception section 201 and transmission processing in transmission section 202.

By way of example, control section 203 acquires information such as data and control information from a higher layer and outputs the data and control information to transmission section 202. Further, control section 203 outputs, for example, the data, the control information, and/or the like received from reception section 201 to the higher layer.

For example, control section 203 controls transmission of information to be fed back to base station 10.

The information to be fed back to base station 10 may include, for example, HARQ-ACK, Channel. State Information (CSI), or Scheduling Request (SR). The information to be fed back to base station 10 may be included in UCI. The UCI is transmitted in a PUCCH resource.

Control section 203 configures a PUCCH resource based on the configuration information (e.g., configuration information such as a PUCCH cell timing pattern and/or DCI, which are/is indicated by RRC) received from base station 10. Control section 203 determines the PUCCH resource to be used for transmitting the information to be fed back to base station 10. Under the control of control section 203, transmission section 202 transmits the information to be fed back to base station 10 in the PUCCH resource determined by control section 203.

Note that, the channels used for DL signal transmission and the channels used for UL signal transmission are not limited to the examples mentioned above. For example, the channels used for the DL signal transmission and the channels used for the UL signal transmission may include a Random Access Channel (RACH) and a Physical Broadcast Channel (PBCH). The RACH may be used for, for example, transmission of Downlink Control Information (DCI) including a Random Access Radio Network Temporary Identifier (RA-RNTI).

Control section 203 may determine reception of the signal to be initially accessed based on a trigger from base station 10 or without a trigger, for example. Reception section 201 may receive the signal to be initially accessed in a resource smaller than a signal to be initially accessed by the NB-IoT device. Reception section 201 may receive two types of synchronization signals or one type of synchronization signal as the signal to be initially accessed. Reception section 201 may receive the signal to be initially accessed that is mapped to one or a plurality of subcarriers.

The present disclosure has been described, thus far. Note that the classification of items in the above description is not essential to the present disclosure, and matters described in two or more items may be used in combination as necessary, and a matter described in an item may be applied to a matter described in another item (unless inconsistent).

<Hardware Structure and the like>

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (e.g., via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

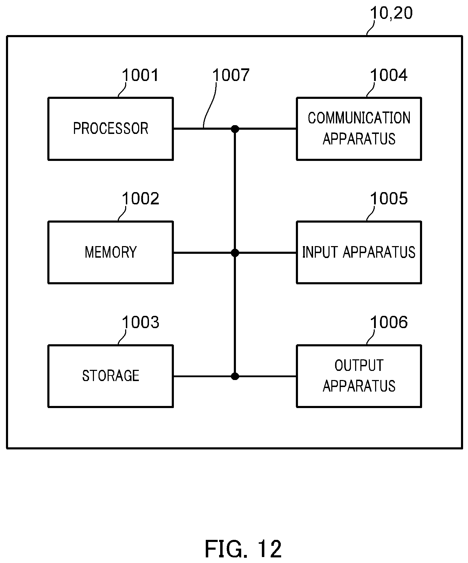

For example, the base station, the device, and the like according to an embodiment of the present disclosure may function as a computer that performs the processing of the wireless communication method of the present disclosure. FIG. 12 is a diagram illustrating an example of a hardware configuration of the base station and the device according to the embodiment. Base station 10 and device 20 may be configured as a computer apparatus including processor 1001, memory 1002, storage 1003, communication apparatus 1004, input apparatus 1005, output apparatus 1006, bus 1007, and the like in a physical manner.

Note that in the present disclosure, the words such as an apparatus, a circuit, a device, a section, a unit, and so on can be interchangeably interpreted. The hardware structure of the base station 10 and the user device 20 may be configured to include one or more of apparatuses illustrated in the drawings, or may be configured not to include part of apparatuses

Each function of base station 10 and devices 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described controller 103 or controller 203, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 203 of device 20 may be implemented by control programs that are stored in the memory 1002 and that operate on the processor 1001, and other functional blocks may be implemented likewise. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (e.g., a compact disc (Compact Disc ROM (CD-ROM) and so on), a digital versatile disc, a Blu-ray (registered trademark) disk), a removable disk, a hard disk drive, a smart card, a flash memory device (e.g., a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, the reception section 102, the reception section 201, transmission section 202, and the like, may be realized by the communication apparatus 1004.

The input apparatus 1005 is an input device that receives input from the outside (e.g., a keyboard, a mouse, a microphone, a switch, a button, a sensor, and so on). The output apparatus 1006 is an output device that allows sending output to the outside (e.g., a display, a speaker, a Light Emitting Diode (LED) lamp, and so on). Note that the input apparatus 1005 and the output apparatus 1006 may be provided in an integrated structure (e.g., a touch panel).

Furthermore, these types of apparatus, including the processor 1001, the memory 1002, and others, are connected by a bus 1007 for communicating information. The bus 1007 may be formed with a single bus or may be formed with buses that vary between pieces of apparatus.

Also, base station 10 and the devices 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

<Notification and Signaling of Information>

Notification of information is by no means limited to the embodiments described in the present disclosure, and other methods may be used as well. For example, notification of information in the present disclosure may be implemented by using physical layer signaling (e.g., downlink control information (DCI), uplink control information (UCI)), higher layer signaling (e.g., Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

<Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (e.g., a combination of LTE or LTE-A and 5G, and the like) for application.

<Processing Procedure and the like>

The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

<Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (e.g., Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

<Direction of Input and Output>

The information or signals described in this disclosure may be output from a higher layer (or lower layer) to a lower layer (or higher layer). The information or signals may be input or output through multiple network nodes.

<Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

<Determination Method>

A decision or a determination in an embodiment of the present invention may be realized by a value (0 or 1) represented by one bit, by a boolean value (true or false), or by comparison of numerical values (e.g., comparison with a predetermined values).

<Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Variations, alternatives, replacements, etc., of the present invention may be possible without departing from the subject matter and the scope of the present invention defined by the descriptions of claims. Therefore, the descriptions of the present specification are for illustrative purposes only and are not intended to be limitations to the present invention.

<Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

<Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

<System and Network>

As used in the present disclosure, the terms "system" and "network" are used interchangeably.

<Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

<Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on

A base station can accommodate one or a plurality of (e.g., three) cells. When a base station accommodates a plurality of cells, the entire coverage area of the base station can be partitioned into multiple smaller areas, and each smaller area can provide communication services through base station subsystems (e.g., indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

<Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

<Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (e.g., a car, an airplane, and the like), may be a moving object which moves unmanned (e.g., a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (e.g., which may be referred to as "Device-to-Device (D2D)," "Vehicle-to-Everything (V2X)," and the like). In this case, devices 20 may have the functions of the base stations 10 described above. The words such as "uplink" and "downlink" may be interpreted as the words corresponding to the device-to-device communication (e.g., "sidelink"). For example, an uplink channel, a downlink channel and so on may be interpreted as a sidelink channel.

Likewise, the terminal in the present disclosure may be interpreted as base station. In this case, the base station 10 may have the functions of device 20 described above.

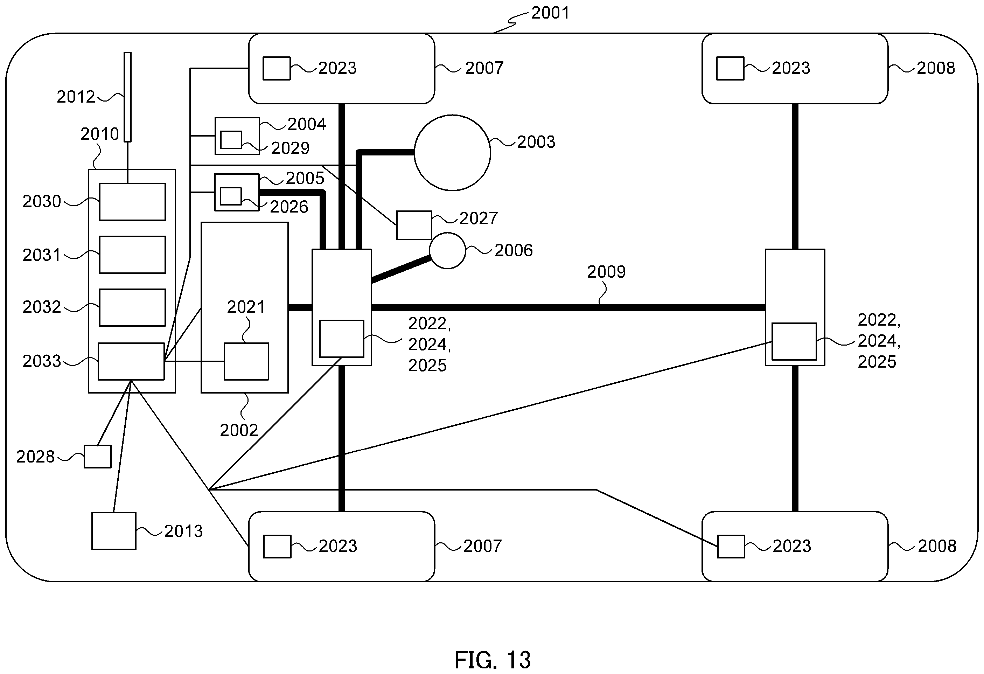

FIG. 13 illustrates an example of a configuration of a vehicle 2001. As illustrated in FIG. 13, the vehicle 2001 includes a drive section 2002, a steering section 2003, an accelerator pedal 2004, a brake pedal 2005, a shift lever 2006, a front wheel 2007, a rear wheel 2008, an axle 2009, an electronic control unit 2010, various sensors 2021-2029, an information service section 2012, and a communication module 2013. The aspects/embodiments described in the present disclosure may be applied to a communication apparatus mounted in the vehicle 2001, and may be applied to, for example, the communication module 2013.

The drive section 2002 may include, for example, an engine, a motor, and a hybrid of an engine and a motor. The steering section 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service section 2012 includes various devices for providing (outputting) various kinds of information such as driving information, traffic information, and entertainment information, including a car navigation system, an audio system, a speaker, a television, and a radio, and one or more ECUs controlling these devices. The information service section 2012 provides various types of multimedia information and multimedia services to the occupants of the vehicle 2001 by using information obtained from the external device through the communication module 2013 or the like.

The information service section 2012 may include an input device (e.g., a keyboard, a mouse, a microphone, a switch, a button, a sensor, a touch panel, and the like) for receiving input from the outside, or may include an output device (e.g., a display, a speaker, an LED lamp, a touch panel, and the like) for implementing output to the outside.

A driving support system section 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. Further, the driving support system section 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive section 2002, the steering section 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2029 described above input to the electronic control unit 2010, information obtained based on the signals, and information based on an input from the outside (a user) obtained via the information service section 2012, to the external apparatus via radio communication. The electronic control unit 2010, the various sensors 2021 to 2029, the information service section 2012, and the like may be referred to as input sections that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service section 2012 provided in the vehicle 2001. The information service section 2012 may be referred to as an output section that outputs information (e.g., outputs information to devices, such as a display and a speaker, based on the PDSCH received by the communication module 2013 (or data/information decoded from the PDSCH)).

Further, the communication module 2013 stores the various types of information received from the external devices in the memory 2032 available to the microprocessor 2031. Based on the information stored in the memory 2032, the microprocessor 2031 may control the drive section 2002, the steering section 2003, the accelerator pedal 2004, the brake pedal 2005, the shift lever 2006, the front wheel 2007, the rear wheel 2008, the axle 2009, the sensors 2021-2029 etc., mounted in the vehicle 2001.

<Meaning and Interpretation of Terms>

As used herein, the term "determining" may encompasses a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

<Reference Signal>

A reference signal may be abbreviated as an "RS," and may be referred to as a "pilot" and so on, depending on which standard applies.

<Meaning of "Based On">

The phrase "based on" (or "on the basis of') as used in the present disclosure does not mean "based only on" (or "only on the basis of"), unless otherwise specified. In other words, the phrase "based on" (or "on the basis of') means both "based only on" and "based at least on" ("only on the basis of" and "at least on the basis of").

<"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

<Means>

"Means" included in the configuration of each of the above apparatuses may be replaced by "parts", "circuits", "devices", etc.

<Open Form>

In the case where the terms "include", "including" and variations thereof are used in the present disclosure, these terms are intended to be comprehensive in the same way as the term "comprising". Further, the term "or" used in the present specification is not intended to be an "exclusive or".

<Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (e.g., 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (e.g., 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (e.g., the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (e.g., a normal TTI, a subframe, or the like) may be interpreted as a TTI having a time length exceeding 1 ms, and a short TTI (e.g., a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG)," a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

<Maximum Transmit Power>

The "maximum transmit power" described in the present disclosure may mean a maximum value of the transmit power, the nominal UE maximum transmit power, or the rated UE maximum transmit power.

<Article>

In the present disclosure, where an article is added by translation, for example "a", "an", and "the", the disclosure may include that the noun following these articles is plural.

<"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

Industrial Applicability

An aspect of the present disclosure is useful for radio communication systems.

Reference Signs List

    10 Base station
    20 Device
    101, 202 Transmission section
    102, 201 Reception section
    103, 203 Control section

**Claims**

1.  A communication apparatus, comprising:

    a control section that determines transmission of a signal to be initially accessed by a device having lower complexity than a Narrow Band-Internet of Things (NB-IoT) device; and
    a transmission section that transmits, by using a resource, the signal to be initially accessed by the device, the resource being smaller than a resource for a signal to be initially accessed by the NB-IoT device.

2.  The communication apparatus according to claim 1, wherein, the transmission section transmits two types of synchronization signals or one type of synchronization signal as the signal to be initially accessed by the device.

3.  The communication apparatus according to claim 1, wherein, the transmission section maps the signal to be initially accessed by the device to a plurality of subcarriers or one subcarrier and transmits the signal.

4.  A device having lower complexity than a Narrow Band-Internet of Things (NB-IoT) device, the device comprising:

    a control section that determines reception of a signal to be initially accessed; and
    a reception section that receives the signal to be initially accessed in a resource smaller than a resource for a signal to be initially accessed by the NB-IoT device.

5.  The device according to claim 4, wherein, the reception section receives two types of synchronization signals or one type of synchronization signal as the signal to be initially accessed.

6.  The device according to claim 4, wherein, the reception section receives the signal that is mapped to a plurality of subcarriers or one subcarrier.

FIG. 1

→ Ambient IoT data/signaling

BS

Ambient IoT
device

Topology 1

FIG. 2

→ Ambient IoT data/signaling

Uu

BS

intermediate
node

Ambient IoT
device

Topology 2

FIG. 3

Ambient IoT data/signaling

Uu

assisting node

BS

Ambient IoT device

Topology 3 with downlink assistance

FIG. 4

Ambient IoT data/signaling

Uu

assisting node

BS

Ambient IoT device

Topology 3 with uplink assistance

FIG. 5

**Ambient IoT data/signaling**

**UE**

**Ambient IoT device**

**Topology 4**

FIG. 6

FIG. 7

FIG. 8

FIG. 9

EP 4 773 706 A1

10

TRANSMISSION
SECTION
101

CONTROL SECTION
103

RECEPTION
SECTION
102

FIG. 10

20

RECEPTION
SECTION
201

CONTROL SECTION
203

TRANSMISSION
SECTION
202

FIG. 11

FIG. 12

FIG. 13

## INTERNATIONAL SEARCH REPORT

| International application No. |
|---|
| **PCT/JP2023/031344** |

| A. | CLASSIFICATION OF SUBJECT MATTER |
|---|---|

*H04W 72/51*(2023.01)i; *H04W 4/70*(2018.01)i; *H04W 48/10*(2009.01)i; *H04W 72/0453*(2023.01)i; *H04W 72/232*(2023.01)i
FI:   H04W72/51; H04W4/70; H04W48/10; H04W72/0453 110; H04W72/232

According to International Patent Classification (IPC) or to both national classification and IPC

| B. | FIELDS SEARCHED |
|---|---|

Minimum documentation searched (classification system followed by classification symbols)

H04W4/00-99/00; H04B7/24-7/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CMCC. Discussion on Ambient IoT. 3GPP TSG RAN #100 Meeting RP-231164. Internet <URL:https://www.3gpp.org/ftp/tsg_ran/TSG_RAN/TSGR_100/Docs/RP-231164.zip>. 05 June 2023<br>section 2.2 | 1-6 |
| Y | OPPO. Discussion on Ambient IoT security. 3GPP TSG SA WG3 Meeting #109 S3-223251. Internet <URL:https://www.3gpp.org/ftp/tsg_sa/WG3_Security/TSGS3_109/Docs/S3-223251.zip>. 07 November 2022<br>section 4 | 1-6 |
| Y | 3rd Generation Partnership Project: Technical Specification Group Radio Access Network: Study on Ambient IoT (Internet of Things) in RAN (Release 18) [online]. 3GPP TR 38.848 V0.2.0. 30 June 2023, [retrieved on 15 February 2024], Retrieved from the Internet <URL: https://www.3gpp.org/ftp/Specs/archive/38_series/38.848/38848-020.zip><br>section 5.2 | 1-6 |

☑ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2023/031344** |

| C. | DOCUMENTS CONSIDERED TO BE RELEVANT | |
| --- | --- | --- |
| Category* | Citation of document, with indication, where appropriate, of the relevant passages | Relevant to claim No. |
| A | HUAWEI. HISILICON. Discussion on feasibility assessment and required functionalities for Ambient IoT. 3GPP TSG RAN #100 Meeting RP-231283. Internet <URL:https://www.3gpp.org/ftp/tsg_ran/TSG_RAN/TSGR_100/Docs/RP-231283.zip>. 05 June 2023 whole document | 1-6 |

Form PCT/ISA/210 (second sheet) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.300 V17.3.0*, December 2022
- New SID: Study on Ambient IoT. *RP-222685, 3GPP TSG RAN Meeting #97-e*, September 2022
- *3GPP TR 38.848 V0.1.0*, March 2023
- *3GPP TS 36.211 V16.7.0*, September 2021